Europäisches Patentamt

European Patent Office

Office européen des brevets

(11) Veröffentlichungsnummer: **0 075 787**
**B1**

# EUROPÄISCHE PATENTSCHRIFT

(45) Veröffentlichungstag der Patentschrift:
27.03.85

(51) Int. Cl.⁴: **B 60 S 1/56**

(21) Anmeldenummer: **82108539.6**

(22) Anmeldetag: **16.09.82**

(54) **Kraftfahrzeug mit einer Wischvorrichtung für Scheiben, insbesondere für die Abdeckscheiben seiner Leuchten.**

(30) Priorität: **23.09.81 DE 3137762**

(43) Veröffentlichungstag der Anmeldung:
**06.04.83 Patentblatt 83/14**

(45) Bekanntmachung des Hinweises auf die Patenterteilung:
**27.03.85 Patentblatt 85/13**

(84) Benannte Vertragsstaaten:
**DE FR IT SE**

(56) Entgegenhaltungen:
**DE - A - 2 355 972**
**DE - A - 2 362 786**
**DE - B - 2 753 016**
**DE - U - 7 420 085**

(73) Patentinhaber: **ROBERT BOSCH GMBH, Postfach 50,
D-7000 Stuttgart 1 (DE)**

(72) Erfinder: **Don, Friedrich, im Burgmäuerle 18,
D-7050 Waiblingen-Hegnach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung geht aus von einem Kraftfahrzeug nach der Gattung des Hauptanspruchs. Es ist schon ein solches Kraftfahrzeug bekannt, bei dem die bewegbaren, vor der zu wischenden Scheibe liegenden Teile seiner Wischvorrichtung völlig freiliegen, so daß diese, beispielsweise durch die Bürsten von automatisch arbeitenden Waschanlagen für Kraftfahrzeuge, beschädigt werden können.

Das erfindungsgemäße Kraftfahrzeug mit den kennzeichnenden Merkmalen des Hauptanspruchs hat demgegenüber den Vorteil, daß die betreffenden Teile der Wischvorrichtung gegen derartige Beschädigungen geschützt sind. Als weiterer Vorteil ist die optische Integration dieser Wischelemente in die Fahrzeugkarosserie anzusehen.

Durch die in den Unteransprüchen aufgeführten Maßnahmen sind vorteilhafte Weiterbildungen und Verbesserungen des im Hauptanspruch angegebenen Kraftfahrzeugs möglich.

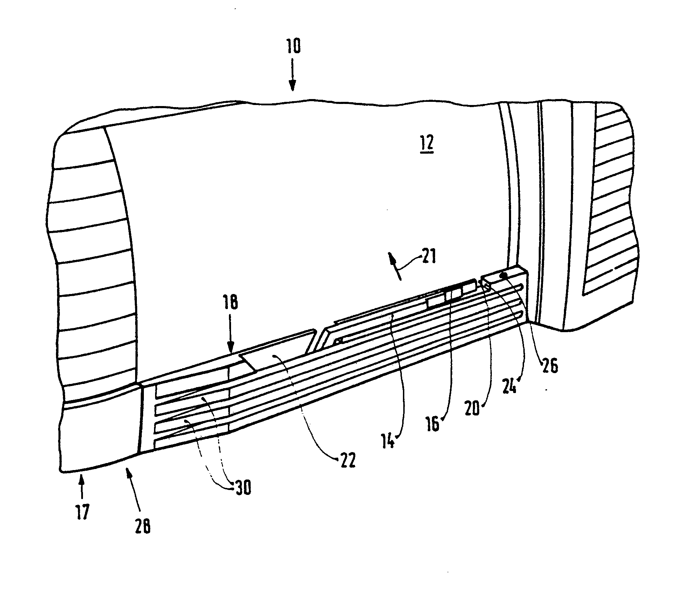

Ein Ausführungsbeispiel der Erfindung ist in der Zeichnung dargestellt und in der nachfolgenden Beschreibung näher erläutert. Die einzige zur Beschreibung gehörende Figur zeigt in einer Teilansicht eines Kraftfahrzeugs den Bereich eines Frontscheinwerfers.

Einem zu einem Kraftfahrzeug gehörenden Frontscheinwerfer 10 ist eine die Scheinwerfer-Abdeckscheibe 12 reinigende Wischvorrichtung zugeordnet. Die Wischvorrichtung weist einen Wischerarm 14 auf, an dessen freien Ende ein Wischblatt 16 befestigt ist. Der Wischerarm 14 ist derart abgewinkelt, daß das Wischblatt 16, zusammen mit dem freien Ende des Wischerarms 14, in der in der Zeichnung dargestellten Ablagestellung des Wischers 14, 16 am unteren Rand der Abdeckscheibe 12 abgelegt ist. Unterhalb der Abdeckscheibe 12 ist die Fahrzeugkarosserie 17 mit einem Bauteil 18 versehen, dessen Höhe, von der Scheibe 12 aus gemessen, der Gesamtbauhöhe des Wischers 14, 16 angepaßt ist. Das Bauteil 18 weist eine zur Scheibe 12 hin offene, nischenförmige Aussparung 20 auf, welche den Wischer 14, 16 in seiner Ablagestellung aufnimmt. Die Nische 20 ist in Anlaufrichtung (Pfeil 21) offen, so daß der Wischer 14, 16 aus dieser heraus anlaufen und im Pendelbetrieb arbeiten kann. Das Bauteil 18 bildet also eine gegenüber der Scheibe 12 vorspringende Stufe, die bis an die in Ablagestellung befindlichen Teile 14, 16 der Wischvorrichtung heranreicht. Die Tiefe der Nische 20 — gemessen in Bewegungsrichtung des Wischers 14, 16 — ist der Breite des Wischblatts 16 bzw. der Breite des Wischerarms 14 angepaßt. Weiter bildet die Nische noch einen Freiraum 22, der einen Pendelbetrieb des Wischerarms 14 ermöglicht. Die Nische 20 ist so ausgebildet, daß das von dem Wischerarm 14 abgewandte Ende des Wischblatts 16 von einer Schulter 24 abgedeckt ist. In dem, bezogen auf das Wischblatt hinter der Schulter 24 liegenden Abschnitt des Bauteils 18, ist eine auf die zu wischende Scheibe 12 gerichtete Spritzdüse 26 für Waschflüssigkeit angeordnet. Das Bauteil 18 ist aus Kunststoff gefertigt und schalenförmig ausgebildet. Es weist an seiner Frontseite Rippen 30 auf, die sich optisch vorteilhaft auswirken, so daß eine saubere Integration des Bauteils 18 in die Fahrzeugkarosserie 17 möglich ist.

Gemäß einer nicht dargestellten Weiterbildung der Erfindung kann das Bauteil 18 im Bereich der Ablagenische 20 mit einer den Wischerarm und das Wischblatt abdeckende Platte versehen sein, so daß sich ein Ablageschacht für den Wischerarm 14 und das Wischblatt 16 ergibt. In diesem Fall ist der Wischer 14, 16 in seiner Ablagestellung nicht sichtbar.

Beiden Ausführungen ist jedoch gemeinsam, daß durch die Anordnung des erfindungsgemäßen Bauteils 18 ein Schutz der über die Abdeckscheibe 12 bewegbaren Wischerteile 14, 16 bewirkt wird. Wie aus der Figur leicht ersichtlich ist, weist das erfindungsgemäße Kraftfahrzeug im Bereich seiner Wischvorrichtung keine Angriffspunkte auf, an denen beispielsweise Reinigungsbürsten von automatisch arbeitenden Fahrzeugwaschanlagen angreifen und die Wischerteile beschädigen können.

## Patentansprüche

1. Kraftfahrzeug mit einer Wischvorrichtung für Scheiben, insbesondere für die Abdeckscheiben seiner Leuchten, die einen angetriebenen, aus einem Wischerarm (14) und einem an diesem befestigten Wischblatt (16) bestehenden Wischer aufweist, dadurch gekennzeichnet, daß in Ablagestellung des Wischers (14, 16) auf der von deren Anlaufrichtung abgewandten Seite eine gegenüber der Scheibe (12) vorspringende Stufe (18) angeordnet ist und an diese Teile (14, 16) heranreicht, deren Höhe von der Scheibe (12) ausgemessen der Gesamthöhe des vor der Scheibe liegenden Wischers (14, 16) angepaßt ist.

2. Kraftfahrzeug nach Anspruch 1, dadurch gekennzeichnet, daß die Stufe durch ein separates Bauteil (18) gebildet am ablageseitigen Scheibenrand angeordnet und mit einer zur Scheibe (12) offenen Nische (20) versehen ist.

3. Kraftfahrzeug nach Anspruch 2, dadurch gekennzeichnet, daß die Nische (20) das von dem Wischerarm (14) abgewandte Ende des Wischblatts (16) abdeckt.

4. Kraftfahrzeug nach einem der Ansprüche 2 oder 3, dadurch gekennzeichnet, daß die Nische (20) einen Wischerarm (14) und Wischblatt (16) abdeckende Platte aufweist.

5. Kraftfahrzeug nach einem der Ansprüche 2 bis 5, dadurch gekennzeichnet, daß das Bauteil (18) mit wenigstens einer auf die zu wischenden Scheibe (12) gerichteten Spritzdüse (26) versehen ist.

6. Kraftfahrzeug nach einem der Ansprüche 2 bis 5, dadurch gekennzeichnet, daß das Bauteil (18) an der Kraftfahrzeugkarosserie (28) befestigt, vorzugsweise in diese integriert ist.

7. Kraftfahrzeug nach einem der Ansprüche 2 bis 6, dadurch gekennzeichnet, daß das Bauteil (18) eine aus Kunststoff gefertigte Schale ist.

## Claims

1. Motor vehicle with a wiping device for screens, especially for the cover screens of its lights, which has a driven wiper consisting of a wiper arm (14) and of a wiper blade (16) fastened to the latter, characterised in that, in the laid-down position of the wiper (14, 16), a step (18) projecting relative to the screen (12) is located on the side facing away from the starting direction of the said wiper and extends up to these parts (14, 16), the height of the step, as measured from the screen (12), matching the total height of the wiper (14, 16) lying in front of the screen.

2. Motor vehicle according to Claim 1, characterised in that the step, formed by a separate component (18), is arranged at the screen edge located on the lying-down side and is provided with a recess (20) open towards the screen (12).

3. Motor vehicle according to Claim 2, characterised in that the recess (20) covers the end of the wiper blade (16) facing away from the wiper arm (14).

4. Motor vehicle according to one of Claims 2 or 3, characterised in that the recess (20) has a plate covering a wiper arm (14) and wiper blade (16).

5. Motor vehicle according to one of Claims 2 to 5, characterised in that the component (18) is provided with at least one spray nozzle (26) directed onto the screen (12) to be wiped.

6. Motor vehicle according to one of Claims 2 to 5, characterised in that the component (18) is fastened to the motor-vehicle body, preferably integrated in the latter.

7. Motor vehicle according to one of Claims 2 to 6, characterised in that the component (18) is a shell produced from plastic.

## Revendications

1. Véhicule automobile muni d'un dispositif d'essuyage pour vitres, notamment pour les vitres de recouvrement de ses feux, qui comporte un essuie-glace (14) et une raclette d'essuie-glace (16) fixée à celui-ci, caractérisé en ce que, dans la position d'effacement de l'essuie-glace (14, 16), sur le côté situé à l'opposé de sa direction de mise en mouvement, est disposé un gradin (18) faisant saillie par rapport à la vitre (12) et s'étendant jusqu'à atteindre ces éléments (14, 16), et dont la hauteur, mesurée à partir de la vitre (12), est adaptée à la hauteur totale de l'essuie-glace (14, 16) situé en avant de la vitre.

2. Véhicule automobile selon la revendication 1, caractérisé en ce que le gradin, formé par un élément de construction sépare (18) est dispose à l'endroit du bord de la vitre situé du côté de l'effacement de l'essuie-glace et est pourvu d'une niche (20) ouvert vers la vitre (12).

3. Véhicule automobile selon la revendication 2, caractérisé en ce que la niche (20) recouvre l'extrémité de la raclette d'essuie-glace (16) située à l'opposé du bras d'essuie-glace (14).

4. Véhicule automobile selon l'une des revendications 2 ou 3, caractérisé en ce que la niche (20) comporte une plaque recouvrant bras d'essuie-glace (14) et raclette d'essuie-glace (16).

5. Véhicule automobile selon l'une des revendications 2 à 4, caractérisé en ce que l'élément de construction (18) est pourvu d'au moins un gicleur (26) dirigé vers la vitre (12) à laver.

6. Véhicule automobile selon l'une des revendications 2 à 6, caractérisé en ce que l'élément de construction (18) est fixé à la carrosserie (28) du véhicule automobile et, de préférence, est intégré dans celle-ci.

7. Véhicule automobile selon l'une des revendications 2 à 6, caractérisé en ce que l'élément de construction (18) est une cuvette fabriquée en matière synthétique.